(19) Europäisches Patentamt / European Patent Office / Office européen des brevets

(11) **EP 2 213 708 B1**

(12) **EUROPEAN PATENT SPECIFICATION**

(45) Date of publication and mention
of the grant of the patent:
**16.07.2014 Bulletin 2014/29**

(21) Application number: **08851291.8**

(22) Date of filing: **11.11.2008**

(51) Int Cl.:
*C09D 155/00* *(2006.01)*     *C08F 283/10* *(2006.01)*
*C08F 290/14* *(2006.01)*     *C09D 133/08* *(2006.01)*
*C09D 5/08* *(2006.01)*     *C08G 59/18* *(2006.01)*
*C09D 163/00* *(2006.01)*

(86) International application number:
**PCT/JP2008/070500**

(87) International publication number:
**WO 2009/066588 (28.05.2009 Gazette 2009/22)**

(54) **AQUEOUS RESIN COMPOSITION FOR COATING, AND AQUEOUS COATING**

WÄSSRIGE HARZZUSAMMENSETZUNG FÜR BESCHICHTUNGSZWECKE SOWIE WÄSSRIGER
BESCHICHTUNGSSTOFF

COMPOSITION AQUEUSE DE RÉSINE POUR REVÊTEMENT ET REVÊTEMENT AQUEUX

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **19.11.2007 JP 2007298955**

(43) Date of publication of application:
**04.08.2010 Bulletin 2010/31**

(73) Proprietor: **Arakawa Chemical Industries, Ltd.**
**Osaka-shi**
**Osaka 541-0046 (JP)**

(72) Inventors:
• **TANIMOTO, Shinichirou**
**Osaka-shi**
**Osaka 538-0053 (JP)**

• **FUJII, Yuji**
**Osaka-shi**
**Osaka 538-0053 (JP)**

(74) Representative: **Hannke, Christian**
**Hannke Bittner & Partner**
**Patent- und Rechtsanwälte**
**Prüfeninger Strasse 1**
**93049 Regensburg (DE)**

(56) References cited:
**JP-A- 6 329 974          JP-A- 7 090 219
JP-A- 59 135 260       JP-A- 2002 146 164
JP-A- 2003 026 739    JP-A- 2005 120 340
JP-A- 2005 187 679    JP-A- 2007 291 343**

EP 2 213 708 B1

**Description**

TECHNICAL FIELD

The invention relates to an aqueous resin composition for a coating, and an aqueous coating.

BACKGROUND ART

While conventional coating films produced from aqueous coatings have been described as having poor corrosion resistance, vinyl-modified epoxy esters with improved corrosion resistance have been developed, which are obtained by polymerizing a vinyl monomer in the presence of a fatty acid-modified epoxy ester. Such vinyl-modified epoxy esters are produced using an epoxy resin as a component and thus have high corrosion resistance and can be dried at room temperature due to the fatty acid ester component and also can form an aqueous composition depending on the selection of the vinyl monomer component.

As the field of aqueous coatings expands, however, coating films have been required to have higher performance, so that there have been a demand for a further increase in the level of corrosion resistance or water resistance and a demand for higher initial coating film hardness. For example, conventional vinyl-modified epoxy esters provide low initial coating film hardness, and the coating film hardness is slowly increased by oxidation polymerization of the fatty acid component in the resins. Therefore, there is a problem that it takes several days to reach the desired hardness, so that scratching may occur at the initial stage of the coating film formation.

Thus, there has been proposed an aqueous vinyl-modified epoxy resin composition that is produced with an aromatic epoxy resin such as a bisphenol type epoxy resin and can form a coating film with high initial hardness and good corrosion resistance (see Patent Literatures 1 and 2), so that the above problem has been solved. However, there is still a room for improvement in terms of the water-whitening resistance of coating films, particularly, in the prevention of whitening of colored coating films such as black coating films, because whitening of such films is easily noticeable.

   Patent Literature 1: JP-A No. 2003-026739
   Patent Literature 2: JP-A No. 2005-120340

From US 2007 283 852 (A 1) a coating composition for cans comprising 100 parts by mass of a neutralized acrylic resin-modified epoxy resin (A), and from 1 to 50 parts by mass of anionic polymer crosolinked fine particles (8) is known. This resin is formed by a carboxyl group in the acrylic resin which is ester addition reacted with an epoxy group in the epoxy resin during the ester addition reaction.

JP 6 329974 A describes an aqueous dispersion of a carboxyl group-containing Acrylic resin. This resin is converted with an acrylic modified epoxy resin.

DISCLOSURE OF INVENTION

PROBLEMS TO BE SOLVED BY THE INVENTION

An object of the invention is to provide an aqueous coating resin composition that resists water-whitening and is prevented from being reduced in corrosion resistance and to provide an aqueous coating containing such an aqueous coating resin composition.

MEANS FOR SOLVING THE PROBLEMS

As a result of investigations to solve the above problem, the inventors have made the invention based on the finding that the problem can be solved using an aqueous resin composition including an acrylic resin emulsion and an aqueous dispersion or solution of a neutralized salt of a reaction product produced from a specific modified epoxy resin and a vinyl monomer. The reaction product obtained from a specific modified epoxy resin and a vinyl monomer may be water-soluble or water-dispersible.

The inventions relates to an aqueous resin composition for a coating including:

   an aqueous composition (A) of a reaction product (3); and
   an acrylic resin emulsion (B), wherein
   the reaction product (3) is obtained by polymerizing, in a modified epoxy resin (1), a vinyl monomer component (2) including a carboxyl group-containing vinyl monomer (2a), wherein the modified epoxy resin (1) is a product of a reaction of at least an epoxy resin (1a) including an aromatic epoxy resin (1a-1) and an amine (1b), wherein the amine (1b)is one or more selected from aliphatic primary amines, aliphatic secondary amines, ethanolamine, diethanolamine, diisopropanolamine, di-2-hydroxybutylamine, N-methylethanolamine, N-ethylethanolamine, and N-benzylethanolamine,

the aqueous composition (A) of the reaction product (3) is a dispersion or solution of the reaction product (3) in water, wherein the reaction product (3) is neutralized with a basic compound, and

the weight ratio ((A)/(B)) based on a solids basis of the aqueous composition (A) to the acrylic resin emulsion (B) is in the range of 50/50 to 95/5

In an preferred embodiment of the invention the reaction product (3) for the aqueous resin composition for a coating is obtained by polymerizing, in a modified epoxy resin (1), wherein the modified epoxy resin (1) is a product of a reaction of the epoxy resin (1a) including the aromatic epoxy resin (1a-1), the amine (1b) and an additional compound (1c) capable of reacting with at least one of the resin (1a) and the amine (1b);

In a further preferred embodiment of the aqueous resin composition for a coating, the additional compound (1c) includes a glycidyl group-containing vinyl monomer (1c-1), the modified epoxy resin (1) is a polymerizable unsaturated group-containing modified epoxy resin (1'), and the reaction product (3) is a vinyl-modified epoxy resin (3') obtained by copolymerizing the polymerizable unsaturated group-containing modified epoxy resin (1') and the vinyl monomer component (2);

In another further preferred embodiment of the aqueous resin composition for a coating, the epoxy resin (1a) is a mixture of the aromatic epoxy resin (1a-1) and an aliphatic epoxy resin (1a-2);

It is further preferred for the aqueous resin composition for a coating, that the vinyl monomer component (2) further includes an additional vinyl monomer (2b) copolymerizable with the carboxyl group-containing vinyl monomer (2a);

In a further preferred embodiment of the aqueous resin composition for a coating, an acrylic resin (4) used for the acrylic resin emulsion (B) is obtained by copolymerizing an acrylate ester (4a) and an additional vinyl monomer (4b) copolymerizable with the acrylate ester (4a);

Further the aqueous resin composition for a coating is preferred, wherein the additional vinyl monomer (4b) is styrene or a styrene derivative;

In a further preferred embodiment of the aqueous resin composition for a coating, the reaction product (3) has an acid value based on a solids basis in the range of 15 to 45 mgKOH/g;

The inventions relates also to an aqueous coating including the above aqueous resin composition for a coating.

EFFECTS OF THE INVENTION

Although the aqueous resin composition for a coating of the invention is an aqueous composition, it can form a coating film that is less susceptible to cracking even after long-term use and not only has high corrosion resistance and high initial coating film hardness but also has high water resistance so that the coating film is less susceptible to whitening even after immersed in water for a long time.

BEST MODE FOR CARRYING OUT THE INVENTION

The reaction product (3) for use in an embodiment of the invention is a product obtained by polymerizing a vinyl monomer component (2) (hereinafter referred to as the component (2)) including a carboxyl group-containing vinyl monomer (2a) (hereinafter referred to as the component (2a)) in a modified epoxy resin (1) (hereinafter referred to as the component (1)) that is a product of the reaction of at least an epoxy resin (1a) (hereinafter referred to as the component (1a)) including an aromatic epoxy resin (hereinafter referred to as the component (1a-1)) and an amine (1b) (hereinafter referred to as the component (1b))wherein the amine (1b) is one or more selected from aliphatic primary amines aliphatic secondary amines, ethanolamine, diethanolamine, diisopropanolamine, di-2-hydroxybutylamine, N-methylethanolamine, N-ethylethanolamine, and N-benzylethanolamine. The epoxy resin (1a) for the reaction product (3) may also include an aliphatic epoxy resin (1a-2).

The component (1) (modified epoxy resin (1)) is obtained by the reaction of essential components including the component (1a) (epoxy resin component), which includes at least the component (1a-1) (aromatic epoxy resin), and the component (1b). Specifically, the epoxy group of the component (1a) is ring-opened by the amino group derived from the component (1b) (amine), and at the same time, the amino group is introduced into the component (1a), so that the inherent performance of the aromatic epoxy resin, such as adhesion can be improved. When the component (1a-2) (aliphatic epoxy resin) is further used as a component to form the component (1) and incorporated into the molecule, the resulting component (1) can have an appropriate degree of flexibility, which can relax the stress produced on the coating film. Therefore, it is considered that the corrosion resistance can be further improved with no reduction in the adhesion.

The component (1a-1) for use in an embodiment of the invention may be any of various known epoxy resins having an aromatic ring in the molecule. Examples of such epoxy resins include bisphenol type epoxy resins and novolac type epoxy resins. Examples of bisphenol type epoxy resins include reaction products of bisphenols with haloepoxides such as epichlorohydrin or β-methylepichlorohydrin. Examples of the bisphenols include reaction products of phenol or 2,6-dihalophenol with aldehydes or ketones, such as formaldehyde, acetaldehyde, acetone, acetophenone, cyclohexanone, and benzophenone; peroxides of dihydroxyphenyl sulfide; and etherification products of hydroquinone molecules. Examples of novolac type epoxy resins include those obtained by the reaction of epichlorohydrin with novolac phenol resins synthesized from phenol, cresol, or the like. One of the above may be used alone as the component (1a-1), or two or more of the above may be used in combination, as needed, as the component (1a-1). In particular, bisphenol type epoxy resins are preferred in view of adhesion to metals. The component (1a-1) preferably has an epoxy equivalent of 170 to 3,000 in view of the molecular weight of the reaction product (3), the workability and anti-gelation during the production of the reaction product (3), and so on. If the epoxy equivalent is more than 3,000, the workability may be low during the production, and gelation may be more likely to occur during the production.

Any of various known epoxy resins having neither aromatic ring nor vinyl group in the molecule may be used as the component (1a-2). Examples of the component (1a-2) include glycidyl ethers of polyhydric alcohols, and so on. Examples of polyhydric alcohols include 1,4-butanediol, 1,6-hexanediol, trimethylolpropane, cyclohexanedimethanol, hydrogenated bisphenol, and polyalkylene glycols having an alkylene glycol structure. Known polyalkylene glycols may be used, such as polyethylene glycol, polypropylene glycol, and polybutylene glycol. Besides glycidyl ethers of polyhydric alcohols, other known epoxy resins such as polybutadiene diglycidyl ether may also be used. Particularly preferred are diglycidyl ethers of alkylene glycol structure-containing diols and polybutadiene diglycidyl ethers, because they can increase the corrosion resistance by relaxing the stress on the coating film. Among glycidyl ethers of polyalkylene glycols, glycidyl ethers of polyethylene glycol are preferably used in terms of improving the water resistance, and glycidyl ethers of polypropylene glycol are preferably used in terms of improving the corrosion resistance.

To impart flexibility to the coating film, any of known epoxidized oils and/or any dimer acid glycidyl ester may be used as a part of the aliphatic epoxy resin component (1a-2). The epoxidized oil refers to a product produced by epoxidizing natural oil or industrially synthesized oil, and examples thereof include epoxidized soybean oil, epoxidized safflower oil, epoxidized linseed oil, and epoxidized cottonseed oil. The dimer acid glycidyl ester may be an epoxy functional group-containing compound that is produced by esterifying the carboxyl group of a known dimer acid with a known diepoxy compound.

Examples of commercially readily available epoxidized oils include Adekacizer O-130P (epoxidized soybean oil) and Adekacizer O-180A (epoxidized linseed oil) each manufactured by ADEKA CORPORATION. Examples of commercially readily available dimer acid glycidyl esters include Epotohto YD-171 and Epotohto YD-172 each manufactured by Tohto Kasei Co., Ltd.

The component (1a-2) preferably has an epoxy equivalent of 87 to 3,000 in view of the molecular weight of the reaction product (3), the workability and anti-gelation during the production of the reaction product (3), and so on. If the epoxy equivalent is more than 3,000, the workability may be low during the production, and gelation may be more likely to occur during the production.

the amine (1b) is one or more selected from aliphatic primary amines aliphatic secondary amines, ethanolamine, diethanolamine, diisopropanolamine, di-2-hydroxybutylamine, N-methylethanolamine, N-ethylethanolamine, and N-benzylethanolamine Various known amines may be used as the component (1b) (amine). According to the present invention the amine is one or more selected from aliphatic primary amines aliphatic secondary amines, ethanolamine, diethanolamine, diisopropanolamine, di-2-hydroxybutylamine, N-methylethanolamine, N-ethylethanolamine, and N-benzylethanolamine. Examples thereof include ethanolamine, diethanolamine, diisopropanolamine, di-2-hydroxybutylamine, N-methylethanolamine, N-ethylethanolamine, N-benzylethanolamine, aliphatic amines, and alicyclic amines. One or more may be appropriately selected from these amines and used. Examples of aliphatic amines includealicyclic amines primary amines such as ethylamine, propylamine, butylamine, hexylamine, octylamine, laurylamine, stearylamine, palmitylamine, oleylamine, and erucylamine; and secondary amines such as diethylamine, dipropylamine, and dibutylamine. Examples of alicyclic amines include cyclopentylamines, cyclohexylamines, and norbornylamines.

An additional compound (1c) (hereinafter referred to as the component (1c)) capable of reacting with at least one of the component (1a) and the component (1b) may also be used as an optional component to form the component (1). If the component (1) is modified with the component (1c) so as to have a higher molecular weight, the water-dispersibility of the resulting aqueous resin composition can be controlled, or the workability of the resulting coating film can be further improved. Examples of the compound (1c) include a glycidyl group-containing vinyl monomer (1c-1) (hereinafter referred to as the component (1c-1)), monovalent to trivalent organic acids, and isocyanate compounds. One of the above compounds may be used alone as the component (1c), or two or more of the above compounds may be used in combination as the component (1c).

Any of various known compounds having a glycidyl group and a polymerizable vinyl group in the molecule may be used as the component (1c-1). Examples of such compounds include glycidyl (meth)acrylate (which is intended to include glycidyl acrylate and/or glycidyl methacrylate, and hereinafter "(meth)" is used in the same meaning), β-methylglycidyl (meth)acrylate,(meth)allyl glycidyl ether, and so on. Examples of monovalent to tetravalent organic acids include various known aliphatic, alicyclic or aromatic carboxylic acids such as dimer acid and trimellitic acid. Examples of isocyanate compounds include various known aromatic, aliphatic or alicyclic polyisocyanates such as tolylene diisocyanate, hexamethylene diisocyanate, isophorone diisocyanate, xylylene diisocyanate, and 4,4'-diphenylmethane diisocyanate.

Concerning the compound (1c), the component (1c-1) can react with the epoxy group of the component (1a) through the component (1b). Therefore, when the component (1c-1) is used, a polymerizable unsaturated group is introduced into the component (1a), so that copolymerizability is imparted, which is most preferred in view of productivity, because the polymerization can be facilitated and because the amount of the polymerization initiator to be used and the reaction time can be reduced. When the component (1c-1) is used, a polymerizable unsaturated group-containing modified epoxy resin (1') is obtained as the modified epoxy resin (1). When the vinyl monomer component (2) is polymerized in the polymerizable unsaturated group-containing modified epoxy resin (1'), the vinyl monomer component (2) is copolymerized with the polymerizable unsaturated group-containing modified epoxy resin (1'), so that a vinyl-modified epoxy resin (3') is obtained. When the component (1c-1) is not used, it is considered that the modified epoxy resin (1) is graft polymerized with the vinyl monomer component (2).

In order to ensure the corrosion resistance and sufficient initial hardness, the content of the component (1a) in the component (1) is generally, but not limited to, from about 50 to about 98% by weight, preferably from 75 to 95% by weight. When the component (1a-2) is added, the amount of the component (1a-2) is generally, but not limited to, about 40% by weight or less, preferably from 5 to 40% by weight, more preferably from 10 to 30% by weight, based on the total amount of the components (1a-1) and (1a-2). When the amount of the component (1a-2) is in the above range, an appropriate degree of flexibility can be imparted to the coating film, and the corrosion resistance can also be improved. When the component (1a-2) is partially replaced with the epoxidized oil and/or the dimer acid glycidyl ester, the epoxidized oil and/or the dimer acid glycidyl ester may be used in an amount of about 5 to about 20% by weight, based on the total amount of the aromatic epoxy resin (1a-1) and all the aliphatic epoxy resins (1a-2) (including the epoxidized oil and/or the dimer acid glycidyl ester), so that flexibility can be imparted to the coating film while the corrosion resistance of the coating film is ensured.

The component (1b) is preferably used in such an amount that the amino group of the component (1b) provides an active hydrogen equivalent of about 90 to about 130 while the component (1a) (or the components (1a) and (1c-1) in the case that the component (1c-1) is contained as the component (1c)) provides a total epoxy equivalent of 100. When the component (1b) is used in such an amount that the active hydrogen equivalent is 90 or more, the aqueous composition of the resulting modified epoxy resin can have more improved storage stability. When the component (1b) is used in such an amount that the active hydrogen equivalent is 130 or less, the risk of gelation during the production of the component (1) can be further reduced.

The component (1c) may be used as needed in such a range that the effects of the invention are not impaired. The component (1c) is generally used in an amount of 45 parts by weight or less, preferably 5 to 45 parts by weight, based on 100 parts by weight of the total amount of the component (1a). When the component (1c-1) is used as the component (1c), the amount of the component (1c-1) to be used is preferably, but not limited to, such that the component (1c-1) provides an epoxy equivalent of about 1 to about 25, while the component (1a) (or the components (1a-1) and (1a-2)) provides an epoxy equivalent (or total epoxy equivalent) of 100. If the epoxy equivalent of the component (lc-1) is less than 1, the aqueous composition (A) of the resulting vinyl-modified epoxy resin (3') may have reduced storage stability. If the epoxy equivalent is more than 25, gelation may tend to occur.

In general, the component (1) (modified epoxy resin (1)) can be easily produced by heating the respective components in the presence of an organic solvent. The reaction temperature is generally from about 60 to about 200°C. If the reaction temperature is too low, the epoxy group may tend to remain unreacted. Therefore, the reaction temperature is preferably 80°C or more. If the reaction temperature is too high, gelation of the reaction product may be easily caused by the ring-opening reaction between the epoxy group in the component (1) and a hydroxyl group in other components or by the ring-opening reaction between epoxy groups. Therefore, the reaction temperature is preferably 150°C or less. While the reaction time depends on the reaction temperature, it is preferably from about 3 to about 10 hours under the temperature conditions described above.

The organic solvent for use in the production of the component (1) is preferably a hydrophilic solvent in terms of forming an aqueous composition of the finally obtained vinyl-modified epoxy resin. Examples of such a hydrophilic solvent include glycol ethers such as propylene glycol monomethyl ether, propylene glycol monoethyl ether, propylene glycol mono(n-butyl) ether, propylene glycol mono(tert-butyl) ether, methyl cellosolve, ethyl cellosolve, n-butyl cellosolve, and tert-butyl cellosolve; and alcohols such as isopropyl alcohol and butyl alcohol.

The component (2) includes the component (2a) as an essential component and may optionally include an additional component (2b) (hereinafter referred to as the component (2b)). The component (2a) to be used may be any known monomer having a carboxyl functional group and a polymerizable vinyl group. Examples of the component (2a) include carboxyl group-containing vinyl monomers such as (meth)acrylic acid, maleic acid, maleic anhydride, fumaric acid, and itaconic acid.

The optional component (2b) may be any known compound copolymerizable with the component (2a). Examples of the component (2b) include alkyl (meth)acrylate esters such as methyl (meth)acrylate, ethyl (meth)acrylate, n-propyl (meth)acrylate, n-butyl (meth)acrylate, isobutyl (meth)acrylate, tert-butyl (meth)acrylate, and 2-ethylhexyl (meth)acrylate; polyalkylene glycol mono(meth)acrylates; polyalkylene glycol di(meth)acrylates; (meth)acrylic silane coupling agents such as 3-methacryloxypropylmethyldiethoxysilane, 3-methacryloxypropylmethyltriethoxysilane, and 3-acryloxypropyltrimethoxysilane; styrene-based vinyl monomers such as styrene, vinyltoluene, and $\alpha$-methylstyrene; and other monomers such as vinyl acetate, $\beta$-hydroxyethyl acrylate, glycidyl acrylate, glycidyl methacrylate, acrylamide, N,N-diethylmethacrylamide, acrylonitrile, and methacrylonitrile. These may be used alone or in combination of two or more thereof. In particular, at least one selected from the group consisting of alkyl (meth)acrylates and styrene-based vinyl monomers is preferably used as the component (2b) in terms of improving the film formability or corrosion resistance. In particular, an alkyl (meth)acrylate is preferably used in combination with styrene.

The component (2a) as an essential component of the component (2) is used to facilitate the production of an aqueous composition of the resulting reaction product (3) to facilitate making it stably dispersible or soluble in water. Thus, the amount of the component (2a) to be used should be determined in view of the production of an aqueous composition of the resulting reaction product (3), and preferably controlled so that the reaction product (3) can have a solids acid value of 15 mgKOH/g or more, more preferably 20 mgKOH/g or more. In order to impart good water resistance or good corrosion resistance to the reaction product (3), the amount of the component (2a) to be used is preferably controlled so that the reaction product (3) can have a solids acid value of 45 mgKOH/g or less, more preferably 38 mgKOH/g or less. Also when the optional component (2b) is used in combination with the component (2a), the amounts of these components may be determined from the same point of view, and is preferably controlled as needed so that the resulting reaction product (3) can have a solids acid value in the same range as mentioned above.

The process of polymerizing the component (2) in the component (1), if the polymerizable unsaturated group-containing modified epoxy resin (1') produced with the component (1c-1) may be used as the component (1), the process of copolymerizing the polymerizable unsaturated group-containing modified epoxy resin (1') and the component (2), may be performed by a known method. Any polymerization initiator such as a known organic peroxide or azo compound may be used. Examples of such a polymerization initiator include benzoyl peroxide, tert-butyl peroctoate, tert-butylperoxy-2-ethylhexanoate, 2,2-azobisisobutyronitrile, and 2,2-azobis(2,4-dimethylvaleronitrile). The polymerization initiator may be used in an amount of about 5 to about 30% by weight, based on the amount of the vinyl monomer component (2), when the component (1) is the polymerizable unsaturated group-containing modified epoxy resin (1') produced with the component (1c-1). When the component (1) is produced without the component (1c-1), the polymerization initiator may be used in an amount of about 20 to about 60% by weight, based on the amount of the monomer component (2) .

While any method may be used in the polymerization or copolymerization, solution polymerization method is preferably used. For example, the polymerization may be performed at a reaction temperature of about 60 to about 150°C in the presence of the polymerization initiator as mentioned above. The same organic solvent as used in the production of the component (1) (modified epoxy resin (1)) may also be used.

The weight ratio ((1)/(2)) of the component (1) to be used to the component (2) to be used may be appropriately determined in view of the solids acid value of the reaction product (3) to be obtained as described above. In general, the weight ratio ((1)/(2)) is preferably in the range of about 99/1 to about 80/20, more preferably in the range of 97/3 to 85/15 in view of improvement of the corrosion resistance. If the amount of the component (2) (vinyl monomer component (2)) to be used is less than the lower limit, the water dispersibility or water solubility may be unstable, so that the product may tend to form a precipitate. If the amount of the component (2) is more than the upper limit, the inherent properties of the vinyl-modified epoxy resin, such as adhesion and corrosion resistance may be more likely to be degraded. When a combination of the components (2a) and (2b) is used as the component (2), the weight ratio ((2a)/[(1)+(2a)+(2b)]) between the component (1) and the monomer components (2a) and (2b) to be used is preferably from 3/97 to 20/80. If the ratio is more than the upper limit, the initial hardness of the coating film, which is the inherent characteristics of the vinyl-modified epoxy resin, may be more likely to be reduced. When the component (2a) is used in combination with the component (2b), a mixture of the components (2a) and (2b) preferably has a glass transition temperature of about -50 to about 70°C, particularly preferably -30 to 60°C, so that the hardness of the coating film can be maintained at a satisfactory level and that the corrosion resistance can be improved. The glass transition temperature (Tg) may be a theoretical Tg calculated from the Fox-Flory equation.

The reaction product (3) obtained as described above is neutralized with a basic compound and dissolved or dispersed in water to form the desired aqueous composition (A). All or part of the carboxyl groups derived from the component (2) (vinyl monomer (2)) of the reaction product (3) are preferably neutralized so that the pH can reach about 7 to about 10 and the solids acid value can reach about 15 to about 45 mgKOH/g. Examples of the basic compound serving as a neutralizing agent include amines such as ammonia, triethylamine and dimethylethanolamine; and hydroxides of alkali metals, such as potassium hydroxide and sodium hydroxide. In view of volatility from the coating film, ammonia or amines are preferred.

The aqueous resin composition of the invention contains an aqueous composition (A) of the reaction product (3) and an acrylic resin emulsion (B). The addition of the acrylic resin emulsion (B) does not cause a loss of the corrosion resistance of the reaction product (3) and can produce high water resistance and further improve the resistance to whitening caused by immersion in water for a long time (hereinafter referred to as "water-whitening resistance").

The acrylic resin (hereinafter referred to as the component (4)) as a resin component of the acrylic resin emulsion (B) may be obtained by a process including polymerizing a (meth)acrylate ester (hereinafter referred to as the component (4a)) as an essential monomer component to form a resin and emulsifying the resin (which does not contain the reaction product (3)). Any of various known (meth)acrylate esters may be used as the component (4a). Examples of the component (4a) to be polymerized include optionally branched alkyl group-containing polymerizable monomers such as methyl (meth)acrylate, ethyl (meth)acrylate, butyl (meth)acrylate, isobutyl (meth)acrylate, and 2-ethylhexyl (meth)acrylate; and glycidyl (meth)acrylate, 2-hydroxyethyl (meth)acylate, and other polymerizable monomers containing active hydrogen of a (meth)acrylate ester or a functional group capable of being involved in various chemical reactions. One of these polymerizable monomers may be used alone, or two or more of them may be used in combination. The content of the component (4a) used to form the component (4) is generally, but not limited to, 5% by weight or more, based on the total amount of all the monomers for the component (4).

If necessary, the component (4) may also contain an additional monomer component (hereinafter referred to as the component (4b)). Any known monomer copolymerizable with the (meth)acrylate ester (4a) may be used as the component (4b). Examples of the component (4b) include a carboxyl group-containing vinyl monomer such as (meth)acrylic acid, maleic acid, fumaric acid, or itaconic acid, an ester of a carboxyl group-containing vinyl monomer (exclusive of the component (4a)), styrenes such as styrene and α-methyl styrene, vinyl acetate, acrylamides (derivatives), and acrylonitrile. Among these monomers, the carboxyl group-containing vinyl monomer is preferred in terms of improving the storage stability of the emulsion, and styrenes such as styrene and α-methyl styrene are preferred in terms of improving the corrosion resistance and water-whitening resistance of the resulting aqueous resin composition.

When the component (4b) is also used as a monomer component for the component (4), the amount of the component (4b) to be used may be from about 20 to about 95% by weight, preferably from 30 to 70% by weight, based on the total amount of all the monomer components for the acrylic resin.

A method of producing the component (4) may include performing any of various known emulsion polymerization methods such as a method of sequentially adding and polymerizing a monomer, a method of sequentially adding and polymerizing an emulsified monomer, and a seed polymerization method, in the presence of a polymerization initiator such as potassium persulfate and a pH regulator such as sodium bicarbonate. Any of various known emulsifying agents such as anionic emulsifying agents, nonionic emulsifying agents, and partially-saponified polyvinyl alcohol may be used in the acrylic polymer emulsion. The amount of the emulsifying agent to be used may be from about 0.1 to about 5 parts by weight, preferably from 0.5 to 3 parts by weight, based on 100 parts by weight of the total amount of the monomer components. If the amount of the emulsifying agent is less than 0.1 parts by weight, the emulsification may be difficult so that an aggregate may tend to be formed. If the amount is more than 5 parts by weight, the water-whitening resistance of the coating film produced with the composition may tend to be low.

The aqueous composition for a coating of the invention may generally be produced by a process including dispersing or dissolving, in water, the reaction product (3) neutralized with a basic compound, so that an aqueous composition (A) of the reaction product (3) is formed, and then adding the acrylic resin emulsion (B) to the aqueous composition (A). This is a non-limiting method, and alternatively, in the process of producing the composition, the acrylic resin emulsion (B) may be added at the stage of the production of the aqueous composition (A) of the reaction product (3), for example, in the step of neutralizing the reaction product (3) or dispersing or dissolving the reaction product (3) in water, or the acrylic resin emulsion (B) may be added to the reaction product (3) simultaneously with or after the addition of an optional component such as a pigment or a plasticizer.

The aqueous resin composition for a coating of the invention includes the aqueous composition (A) of the reaction product (3) and the acrylic resin emulsion (B), wherein the weight ratio based on a solids basis, of the aqueous composition (A) of the reaction product (3) to the acrylic resin emulsion (B) (the aqueous composition (A) of the reaction product (3)/the acrylic resin emulsion (B)) is preferably from 50/50 to 95/5, more preferably from 60/40 to 85/15. If the amount of the acrylic resin emulsion (B) is less than 5 parts by weight, the effect of improving the water-whitening resistance of the resulting coating film may tend to be insufficient. If it is more than 50 parts by weight, the corrosion resistance may tend to be low.

The aqueous resin composition of the invention may be used in various applications as an aqueous coating for various materials such as wood, paper, fibers, plastics, ceramics, iron, and nonferrous metals, or as a coating agent, an adhesive, or the like. When used in various applications, the aqueous composition may be simply diluted with water and then used, or if necessary, may be mixed with an additive such as a pigment, a plasticizer, a solvent, a coloring agent, or an anti-foaming agent, or mixed with any other water-soluble or water-dispersible resin.

EXAMPLES

The invention is more specifically described by Examples and Comparative Examples below, which are not intended to limit the scope of the invention. In each example, "parts" and "%" are all by weight, unless otherwise stated.

The non-volatile content, the viscosity, and the solids acid value were measured by the methods described below.

(Measurement of Non-Volatile Content)

The non-volatile content was measured by the coating component test method (heating residue) according to JIS K 5601-1-2. Specifically, about 1.0 to 1.2 g of a sample was accurately weighed in an ointment can (57 × 10 mm) with a known weight and spread over the bottom. The can was then placed in a drying oven kept at 135°C and heated for 3 hours. The can was cooled in a desiccator, and the weight of the sample residue was measured. The non-volatile content was calculated by the following formula:

$$\text{non-volatile content (\%)} = R \times 100/S$$

wherein R is the weight (g) of the residue, and S is the weight (g) of the sample.

(Measurement of Viscosity)

The viscosity was measured according to JIS K 7117-1. Specifically, the sample was adjusted to 25°C and then measured using a B-type viscometer. The rotor No. 3 was used, and the value at 30 rpm was read. The viscosity was determined by the following formula:

$$\text{viscosity (mPa·s)} = \text{(the measured value)} \times 40.$$

(Method for Measuring pH)

The pH measurement method was according to JIS Z 8802. Specifically, 5 g of a sample was placed in a 50 ml beaker, and the sample was uniformly diluted (to a solids content of 5%) by the addition of 28 g of deionized water. The pH of the diluted sample was measured at 20 to 25°C with a pH meter adjusted on the alkaline side.

(Measurement of Solids Acid Value)

The measurement was performed according to JIS K 0070. About 2 g of a sample was accurately weighed in a 100 ml Erlenmeyer flask, and 20 g of THF was added thereto, so that a solution was formed. The solution was titrated with an ethyl alcohol solution of 0.1 mol/l potassium hydroxide, using phenolphthalein as an indicator. The neutralization end point was read at that time when the slightly pink color did not fade in 30 seconds, and the acid value was calculated by the following formula:

$$\text{solids acid value} = (a) \times 5.61 \times (f)/((s) \times \text{non-volatile content}),$$

wherein (a) is the amount (ml) of the ethyl alcohol solution of 0.1 mol/l potassium hydroxide used, (f) is the titer of the ethyl alcohol solution of 0.1 mol/l potassium hydroxide, and (s) is the weight (g) of the sample.

(Production Example 1) Production of Aqueous Composition 1 of Vinyl-Modified Epoxy Resin

To a reactor equipped with an agitator, a condenser, a thermometer, and a nitrogen gas-introducing tube were added 125 g of butyl cellosolve, 285 g of a bisphenol A type epoxy resin (Epotohto YD-014, 950 in epoxy equivalent, manufactured by Tohto Kasei Co., Ltd.), and 6.5 g of glycidyl methacrylate, and dissolved at 100°C under a nitrogen gas flow. Thereafter, 22.0 g of octylamine and 14.7 g of dibutylamine were added thereto, and the mixture was allowed to react for 5 hours, so that a polymerizable unsaturated group-containing modified epoxy resin was obtained. Subsequently, a mixture of 15 g of acrylic acid, 13.0 g of styrene, 8.0 g of butyl acrylate, 40 g of butyl cellosolve, and 3 g of tert-butylperoxy-2-ethylhexanoate was added dropwise to the reaction system over 1 hour, and the reaction system was kept at that temperature for 4 hours. The reaction system was cooled to 80°C, and then 21 g of triethylamine and 500 g of water were sequentially added thereto and mixed, so that an aqueous composition 1 of dispersed vinyl-modified epoxy resin was obtained which had a non-volatile content of 34.5%, a viscosity of 1,600 mPa·s, a pH of 9.5, and a solids acid value of 29.

(Production Example 2) Production of Aqueous Composition 2 of Vinyl-Modified Epoxy Resin

To a reactor equipped with an agitator, a condenser, a thermometer, and a nitrogen gas-introducing tube were added 125 g of butyl cellosolve, 210 g of a bisphenol A type epoxy resin (Epotohto YD-014, 950 in epoxy equivalent, manufactured by Tohto Kasei Co., Ltd.), 75 g of polyethylene glycol diglycidyl ether (Denacol EX-841, Nagase ChemteX Corporation), and 6.5 g of glycidyl methacrylate, and dissolved at 100°C under a nitrogen gas flow. Thereafter, 22.0 g of octylamine and 14.7 g of dibutylamine were added thereto, and the mixture was allowed to react for 5 hours, so that a polymerizable unsaturated group-containing modified epoxy resin was obtained. Subsequently, a mixture of 15 g of acrylic acid, 13.0 g of styrene, 8.0 g of butyl acrylate, 40 g of butyl cellosolve, and 3 g of tert-butylperoxy-2-ethylhexanoate was added dropwise to the reaction system over 1 hour, and the reaction system was kept at that temperature for 4 hours. The reaction system was cooled to 80°C, and then 21 g of triethylamine and 500 g of water were sequentially added thereto and mixed, so that an aqueous composition 2 of dispersed vinyl-modified epoxy resin was obtained which had a non-volatile content of 35.0%, a viscosity of 1,000 mPa•s, a pH of 9.5, and a solids acid value of 29.

(Production Example 3) Production of Aqueous Composition 3 of Vinyl-Modified Epoxy Resin

To a reactor equipped with an agitator, a condenser, a thermometer, and a nitrogen gas-introducing tube were added 125 g of butyl cellosolve, 285 g of a bisphenol A type epoxy resin (Epotohto YD-014, 950 in epoxy equivalent, manufactured by Tohto Kasei Co., Ltd.), and 6.5 g of glycidyl methacrylate, and dissolved at 100°C under a nitrogen gas flow. Thereafter, 22.0 g of octylamine and 14.7 g of dibutylamine were added thereto, and the mixture was allowed to react for 5 hours, so that a polymerizable unsaturated group-containing modified epoxy resin was obtained. Subsequently, a mixture of 21 g of acrylic acid, 13.0 g of styrene, 8.0 g of butyl acrylate, 40 g of butyl cellosolve, and 6 g of tert-butylperoxy-2-ethylhexanoate was added dropwise to the reaction system over 1 hour, and the reaction system was kept at that temperature for 4 hours. The reaction system was cooled to 80°C, and then 21 g of triethylamine and 500 g of water were sequentially added thereto and mixed, so that an aqueous composition 3 of dispersed vinyl-modified epoxy resin was obtained which had a non-volatile content of 34.2%, a viscosity of 1,400 mPa·S, a pH of 9.5, and a solids acid value of 37.5.

(Production Example 4) Production of Aqueous Composition 4 of Vinyl-Modified Epoxy Resin

To a reactor equipped with an agitator, a condenser, a thermometer, and a nitrogen gas-introducing tube were added 125 g of butyl cellosolve, 285 g of a bisphenol A type epoxy resin (Epotohto YD-014, 950 in epoxy equivalent, manufactured by Tohto Kasei Co., Ltd.), and 6.5 g of glycidyl methacrylate, and dissolved at 100°C under a nitrogen gas flow. Thereafter, 22.0 g of octylamine and 14.7 g of dibutylamine were added thereto, and the mixture was allowed to react for 5 hours, so that a polymerizable unsaturated group-containing modified epoxy resin was obtained. Subsequently, a mixture of 9 g of acrylic acid, 13.0 g of styrene, 8.0 g of butyl acrylate, 40 g of butyl cellosolve, and 6 g of tert-butylperoxy-2-ethylhexanoate was added dropwise to the reaction system over 1 hour, and the reaction system was kept at that temperature for 4 hours. The reaction system was cooled to 80°C, and then 21 g of triethylamine and 500 g of water were sequentially added thereto and mixed, so that an aqueous composition 4 of dispersed vinyl-modified epoxy resin was obtained which had a non-volatile content of 34.5%, a viscosity of 1,600 mPa·s, a pH of 9.5, and a solids acid value of 17.5.

(Production Example 5) Production of Aqueous Composition 5 Obtained by Polymerizing Vinyl Monomer in Modified Epoxy Resin

To a reactor equipped with an agitator, a condenser, a thermometer, and a nitrogen gas-introducing tube were added 125 g of butyl cellosolve, and 285 g of a bisphenol A type epoxy resin (Epotohto YD-014, 950 in epoxy equivalent, manufactured by Tohto Kasei Co., Ltd.), and dissolved at 100°C under a nitrogen gas flow. Thereafter, 22.0 g of octylamine and 14.7 g of dibutylamine were added thereto, and the mixture was allowed to react for 5 hours, so that a modified epoxy resin was obtained. Subsequently, a mixture of 15 g of acrylic acid, 13.0 g of styrene, 8.0 g of butyl acrylate, 40 g of butyl cellosolve, and 18 g of tert-butylperoxy-2-ethylhexanoate was added dropwise to the reaction system over 3 hour, and the reaction system was kept at that temperature for 6 hours. The reaction system was cooled to 80°C, and then 21 g of triethylamine and 500 g of water were sequentially added thereto and mixed, so that an aqueous composition 5 of dispersed vinyl-modified epoxy resin was obtained which had a non-volatile content of 36.5%, a viscosity of 900 mPa·s, a pH of 9.5, and a solids acid value of 29.

(Production Example 6) Production of Aqueous Composition 6 of Fatty Acid-Modified Epoxy Resin

To a reactor equipped with an agitator, a condenser, a thermometer, and a nitrogen gas-introducing tube were added 200 g of a bisphenol A type epoxy resin (Epotohto YD-014, 950 in epoxy equivalent, manufactured by Tohto Kasei Co., Ltd.), 96 g of soybean oil fatty acid, and 0.15 g of sodium hydrogencarbonate. While nitrogen gas was blown into the reactor, the mixture was heated at 220°C and subjected to an addition-condensation reaction until the acid value reached 1 or less, so that a fatty acid-modified epoxy ester was obtained. To the same type reactor were added 250 g of the resulting fatty acid-modified epoxy ester and 50 g of tert-butyl cellosolve, and the mixture was stirred and heated at 130°C. Subsequently, a mixture of 18 g of styrene, 14 g of acrylic acid, 3 g of tert-butylperoxybenzoate, and 80 g of tert-butyl cellosolve was added dropwise to the reaction system over 1 hour, and the reaction system was further kept at that temperature for 4 hours. The reaction system was cooled to 80°C, and then 19 g of triethylamine and 400 g of water were sequentially added thereto and mixed, so that an aqueous dispersion of vinyl-modified epoxy ester resin was obtained which had a non-volatile content of 34.8%, a viscosity of 300 mPa·s, a pH of 9.7, and a solids acid value of 35.

Table 1 shows the respective components of the aqueous composition of the reaction product produced with the modified epoxy resin obtained in each of Production Examples 1 to 6.

Table 1

| | Components (g) of aqueous composition of reaction product | | | | | | | | | Physical properties | | |
|---|---|---|---|---|---|---|---|---|---|---|---|---|
| | 1a-1 | 1a-2 | 1b | | 1c | | 2a | 2b | | | | |
| | BPA | PEGGE | OA | DBA | GMA (1c-1) | Soybean oil fatty acid | AA | ST | BA | Viscosity (mPa•s) | PH | Solids acid value (mgKOH/g) |
| Productior Examples 1 | 285 | - | 22.0 | 14.7 | 6.5 | - | 15.0 | 13.0 | 8.0 | 1,600 | 9.5 | 29 |
| Productior Examples 2 | 210 | 75 | 22.0 | 14.7 | 6.5 | - | 15.0 | 13.0 | 8.0 | 1,000 | 9.5 | 29 |
| Productior Examples 3 | 285 | - | 22.0 | 14.7 | 6.5 | - | 21.0 | 13.0 | 8.0 | 1,400 | 9.4 | 37.5 |
| Productior Examples 4 | 285 | - | 22.0 | 14.7 | 6.5 | - | 9.0 | 13.0 | 8.0 | 1,600 | 9.5 | 17.5 |
| Production Examples 5 | 285 | - | 22.0 | 14.7 | - | - | 15.0 | 13.0 | 8.0 | 900 | 9.5 | 29 |
| Production Examples 6 | 200 | - | - | - | - | 96 | 14.0 | 18.0 | - | 300 | 9.7 | 35 |

The table uses the following abbreviations: BPA (bisphenol A type epoxy resin), PEGGE (polyethylene glycol diglycidyl ether), OA (octylomine), DBA (dibutylamine), GMA (glycidyl methacrylate), AA (acrylic acid), ST (styrene), BA (butyl acrylate).

(Production Example 7) Production of Acrylic Resin Emulsion 1

(1) 44 parts of water
(2) 0.90 parts of an anionic emulsifying agent (Hitenol S (trade name), with a solids content of 50%, manufactured by Daiichi Kogyo Seiyaku Co., Ltd.)
(3) 10 parts of methyl methacrylate (20% by weight), 12.5 parts of butyl methacrylate (25% by weight), 10 parts of butyl acrylate (20% by weight), 15 parts of styrene (30% by weight), 2.5 parts of acrylic acid (5% by weight)
(4) 0.2 parts of a catalyst (potassium persulfate) and 33 parts of water

The materials (1) and (2) were dissolved at 70°C under a nitrogen gas flow in a four-neck flask equipped with an agitator, a condenser tube, a dropping funnel, and a nitrogen-introducing tube, and then 1/10 of the total amount of the materials (3) and (4) were added thereto under stirring. Under a nitrogen gas flow, the mixture was subjected to a pre-reaction at 70°C for 30 minutes, and then 9/10 of the total amount of the materials (3) and (4) were added dropwise thereto over 2 hours so that dropping polymerization was performed. After the whole amount of the materials (3) and (4) were added dropwise, the final reaction was performed at 70°C for 1 hour. After 3.5 g of triethylamine was added to the reaction product, the product was cooled to room temperature and then taken out through filtration with a 100 mesh wire screen, so that an acrylic resin emulsion 1 (Em1) with a solids content of 40.2% was obtained. The characteristic values of the acrylic resin emulsion 1 are shown in Table 2.

(Production Examples 8 to 12) Production of Acrylic Resin Emulsions 2 to 6

Acrylic resin emulsions 2 to 6 (Em2 to Em6) were produced as in Production Example 7, except that the monomer components used in the production of the acrylic resin emulsion 1 were changed as shown in Table 2. The physical properties of the resulting acrylic resin emulsions 2 to 6 are shown in Table 2.

Table 2

| | Monomer components (wt%) of acrylic resin emulsion | | | | | Physical properties | | |
|---|---|---|---|---|---|---|---|---|
| | Methyl methacrylate | Butyl methacrylate | Butyl acrylate | Styrene | Acrylic acid | Viscosity (mPa·s) | Non-volatile content (wt%) | pH |
| Production Examples 7 (Em1) | 20 | 25 | 20 | 30 | 5 | 900 | 40.2 | 8.5 |
| Production Examples 8 (Em2) | 25 | 25 | 25 | 20 | 5 | 800 | 40.3 | 8.7 |
| Production Examples 9 (Em3) | 15 | 15 | 15 | 50 | 5 | 850 | 40 | 8.8 |
| Production Examples 10 (EM4) | 10 | 10 | 5 | 70 | 5 | 700 | 40.1 | 8.6 |
| Production Examples 11 (Em5) | 30 | 35 | 30 | 0 | 5 | 1000 | 40 | 8.6 |
| Production Examples 12 (Em6) | 0 | 5 | 0 | 90 | 5 | 650 | 40.3 | 8.7 |

(Preparation of Aqueous Coating)

An aqueous coating was prepared using the resulting aqueous composition (A) of the reaction product produced with the modified epoxy resin (Production Examples 1 to 6) and using the resulting acrylic resin emulsion (B) (Production Examples 7 to 12), and the performance of a coating film produced from the coating was evaluated. The method for preparing the aqueous coating and the method for evaluating the coating film are described below, and the result of the evaluation of the resulting coating film is shown in Table 3.

(Example 1)

Forty-seven g of the aqueous composition 1 of the vinyl-modified epoxy resin obtained in Production Example 1, 1.8 g of carbon black, 5.6 g of zinc phosphate, 23.8 g of calcium carbonate, 1.8 g of deionized water, and 80 g of glass beads were mixed and then kneaded in a paint shaker for 1 hour and 30 minutes. Thereafter, 17.5 g of the acrylic resin emulsion 3 (Production Example 9) was added thereto, and then the glass beads were removed, so that an aqueous coating with a PWC (pigment weight concentration) of 57% and a coating concentration of 56% was prepared.

(Examples 2 to 13 and Comparative Examples 1 to 5)

Aqueous coatings were prepared as in Example 1, except that the type of the aqueous composition (A) of the reaction product produced with the modified epoxy resin, the type of the acrylic resin emulsion (B), and the ratio based on a solids basis between the aqueous composition (A) and the acrylic resin emulsion (B) were changed as shown in Table 3.

(Formation of Coating Film)

The resulting aqueous coating was applied to a degreased dull steel plate (SPCC-SD, 0.8 × 70 × 150 mm) by a bar coater so that the resulting film could have a thickness of 20 μm after drying. The film was subjected to forced drying (at 80°C for 20 minutes) and then allowed to stand at room temperature (20°C and 60%R.H.) for 5 days.

(Coating Film Evaluation Tests)

The hardness of the coating film was evaluated according to JIS K 5600.
The corrosion resistance of the coating film was evaluated according to JIS K 5600. The corrosion resistance was indicated by the width (mm, one side from the center) of the portion peeled off with a cellophane tape after the brine spray test for 15 days. The larger the values indicate, the lower the corrosion resistance.
Concerning the water resistance, the coating film was immersed in warm water at 40°C for 20 days, and then how the coating film changed after taken out was visually evaluated.

⊙: No whitening was observed in the coating film.
○: Almost no whitening was observed in the coating film.
Δ: Whitening was slightly observed in the coating film.
×: Whitening was remarkably observed in the coating film.

Table 3

| | | Resin components of aqueous resin composition for a coating | | | Coating film evaluation results | | | |
| --- | --- | --- | --- | --- | --- | --- | --- | --- |
| | | Type of aqueous composition (A) of reaction product | Type of acrylic resin emulsion (B) | (A) / (B) ratio (wt%) | Water-whitening resistance | Hardness | | Corrosion resistance |
| | | | | | | Initial | After 5 days | |
| Example 1 | | Production Examples 1 | Production Examples 9 (Em3) | 70/30 | ⊙ | 2B | F | 1-2 mm |

(continued)

| | Resin components of aqueous resin composition for a coating | | | Coating film evaluation results | | | |
|---|---|---|---|---|---|---|---|
| | Type of aqueous composition (A) of reaction product | Type of acrylic resin emulsion (B) | (A) / (B) ratio (wt%) | Water-whitening resistance | Hardness | | Corrosion resistance |
| | | | | | Initial | After 5 days | |
| Example 2 | Production Examples 2 | Production Examples 9 (Em3) | 70/30 | ⊙ | 2B | HB | 1-2 mm |
| Example 3 | Production Examples 3 | Production Examples 9 (Em3) | 70/30 | ○ | 2B | F | 2 mm |
| Example 4 | Production Examples 4 | Production Examples 9 (Em3) | 70/30 | ⊙ | 2B | F | 2-3 mm |
| Example 5 | Production Examples 5 | Production Examples 9 (Em3) | 70/30 | ⊙ | 2B | F | 1-2 mm |
| Example 6 | Production Examples 1 | Production Examples 8 (Em2) | 70/30 | ⊙ | 2B | F | 1-2 mm |
| Example 7 | Production Examples 1 | Production Examples 7 (Em1) | 70/30 | ⊙ | 2B | F | 1-2 mm |
| Example 8 | Production Examples 1 | Production Examples 9 (Em3) | 90/10 | ○ | 2B | F | 1-2 mm |
| Example 9 | Production Examples 1 | Production Examples 9 (Em3) | 80/20 | ⊙ | 2B | F | 1-2 mm |
| Example 10 | Production Examples 1 | Production Examples 9 (Em3) | 50/50 | ⊙ | 2B | F | 2 mm |
| Example 11 | Production Examples 1 | Production Examples 10 (Em4) | 70/30 | ⊙ | 2B | F | 1-2 mm |
| Example 12 | Production Examples 1 | Production Examples 11 (Em5) | 70/30 | Δ-○ | 2B | F | 1-2 mm |
| Example 13 | Production Examples 1 | Production Examples 12 (Em6) | 70/30 | Δ-○ | 2B | F | 1-2 mm |
| Comparative Examples 1 | Production Examples 1 | - | 100/0 | Δ | 2B | F | 1-2 mm |
| Comparative Examples 2 | Production Examples 2 | - | 100/0 | Δ-✕ | 2B | HB | 1-2 mm |

(continued)

| | Resin components of aqueous resin composition for a coating | | | Coating film evaluation results | | | |
| --- | --- | --- | --- | --- | --- | --- | --- |
| | Type of aqueous composition (A) of reaction product | Type of acrylic resin emulsion (B) | (A) / (B) ratio (wt%) | Water-whitening resistance | Hardness | | Corrosion resistance |
| | | | | | Initial | After 5 days | |
| Comparative Examples 3 | Production Examples 1 | Production Examples 9 (Em3) | 40/60 | ⊙ | 2B | F | 3-4 mm |
| Comparative Examples 4 | Production Examples 6 | - | 100/0 | × | 6B | 4B | 1-2 mm |
| Comparative Examples 5 | Production Examples 6 | Production Examples 9 (Em3) | 70/30 | × | 5B | 3B | 3-4 mm |

**Claims**

1. An aqueous resin composition for a coating, comprising:

   an aqueous composition (A) of a reaction product (3); and
   an acrylic resin emulsion (B), wherein

   the reaction product (3) is obtained by polymerizing, in a modified epoxy resin (1), a vinyl monomer component (2) comprising a carboxyl group-containing vinyl monomer (2a), wherein the modified epoxy resin (1) is a product of a reaction of at least an epoxy resin (1a) comprising an aromatic epoxy resin (1a-1) and an amine (1b), wherein the amine (1b) is one or more selected from al-iphatic primary amines, aliphatic secondary amines, ethanolamine, diethanolamine, diisopropanolamine, di-2-hydroxybutylamine, N-methylethanolamine, N-ethylethanolamine, and N-benzylethanolamine,
   the aqueous composition (A) of the reaction product (3) is a dispersion or solution of the reaction product (3) in water, wherein the reaction product (3) is neutralized with a basic compound, and
   the weight ratio ((A)/(B)) based on a solids basis of the aqueous composition (A) to the acrylic resin emulsion (B) is in the range of 50/50 to 95/5.

2. The aqueous resin composition for a coating of claim 1, wherein the modified epoxy resin (1) is a product of a reaction of the epoxy resin (1a) comprising the aromatic epoxy resin (1a-1), the amine (1b) and an additional compound (1c) capable of reacting with at least one of the resin (1a) and the amine (1b).

3. The aqueous resin composition for a coating of claim 2, wherein the additional compound (1c) comprises a glycidyl group-containing vinyl monomer (1c-1), the modified epoxy resin (1) is a polymerizable unsaturated group-containing modified epoxy resin (1'), and the reaction product (3) is a vinyl-modified epoxy resin (3') obtained by copolymerizing the polymerizable unsaturated group-containing modified epoxy resin (1') and the vinyl monomer component (2).

4. The aqueous resin composition for a coating of any one of claims 1 to 3, wherein the epoxy resin (1a) is a mixture of the aromatic epoxy resin (1a-1) and an aliphatic epoxy resin (1a-2).

5. The aqueous resin composition for a coating of any one of claims 1 to 4, wherein the vinyl monomer component (2) further comprises an additional vinyl monomer (2b) copolymerizable with the carboxyl group-containing vinyl monomer (2a).

6. The aqueous resin composition for a coating of any one of claims 1 to 5, wherein an acrylic resin (4) used for the acrylic resin emulsion (B) is obtained by copolymerizing an acrylate ester (4a) and an additional vinyl monomer (4b) copolymerizable with the acrylate ester (4a).

7. The aqueous resin composition for a coating of claim 6, wherein the additional vinyl monomer (4b) is styrene or a styrene derivative.

8. The aqueous resin composition for a coating of any one of claims 1 to 7, wherein the reaction product (3) has an acid value based on a solids basis in the range of 15 to 45 mgKOH/g.

9. An aqueous coating comprising the aqueous resin composition for a coating of any one of claims 1 to 8.

**Patentansprüche**

1. Eine wässrige Harzzusammensetzung für einen Beschichtungszweck, umfassend:

   eine wässrige Zusammensetzung (A) eines Reaktionsprodukts (3); und eine Acryl-Harzemulsion (B), wobei das Reaktionsprodukt (3) durch Polymerisation, in einem modifizierten Epoxidharz (1), eine Vinyl-Monomer-Komponente erhalten wird, umfassend ein Carboxylgruppe-enthaltendes Vinyl-Monomer (2a), wobei das modifizierte Epoxidharz (1) ein Reaktionsprodukt von mindestens einem Epoxidharz (1a), umfassend ein aromatisches Epoxidharz (1a-1) und ein Amin (1b) ist, wobei das Amin (1 b) eines oder mehrere ist, ausgewählt aus aliphatisch primären Aminen, aliphatisch sekundären Aminen, Ethanolamin, Diethanolamin, Diisopropanolamin, Di-2-Hydroxybutylamin, N-Methylethanolamin, N-Ethylethanolamin, und N-Benzylethanolamin, wobei die wässrige Zusammensetzung (A) des Reaktionsprodukts (3) eine Dispersion oder Lösung des Reaktionsprodukts (3) in Wasser ist, wobei das Reaktionsprodukt (3) mit einer Basisverbindung neutralisiert ist, und wobei das Gewichtsverhältnis ((A)/(B)), basierend auf einer Festkörperbasis der wässrigen Zusammensetzung (A) zu der Acryl-Harzemulsion (B) in dem Bereich von 50/50 bis 95/5 ist.

2. Die wässrige Harzzusammensetzung für einen Beschichtungszweck nach Anspruch 1, wobei das modifizierte Epoxidharz (1) ein Produkt des Epoxidharzes (1a) ist, umfassend das aromatische Epoxidharz (1a-1), das Amin (1 b) und eine zusätzliche Verbindung (1c) geeignet zur Reaktion mit mindestens einem von dem Harz (1a) und dem Amin (1b).

3. Die wässrige Harzzusammensetzung für einen Beschichtungszweck nach Anspruch 2, wobei die zusätzliche Verbindung (1c) ein Glycidylgruppe-enthaltendes Vinyl-Monomer (1c-1) umfasst, wobei das modifizierte Epoxidharz (1) ein polymerisierbare ungesättigte Gruppe -enthaltendes modifiziertes Epoxidharz (1') ist, und das Reaktionsprodukt (3) ist ein vinyl-modifiziertes Epoxidharz (3'), das erhalten wird durch Copolymerisation des polymerisierbare ungesättigte Gruppe - enthaltenden modifizierten Epoxidharzes (1') und der Vinyl-Monomer-Komponente (2).

4. Die wässrige Harzzusammensetzung für einen Beschichtungszweck nach einem der Ansprüche 1 bis 3, wobei das Epoxidharz (1a) eine Mischung ist aus dem aromatischen Epoxidharz (1a-1) und einem aliphatischen Epoxidharz (1a-2).

5. Die wässrige Harzzusammensetzung für einen Beschichtungszweck nach einem der Ansprüche 1 bis 4, wobei die Vinyl-Monomer-Komponente (2) weiterhin ein zusätzliches Vinyl-Monomer (2b), das copolymerisierbar mit dem Carboxylgruppe enthaltenden Vinyl-Monomer (2a) ist, umfasst.

6. Die wässrige Harzzusammensetzung für einen Beschichtungszweck nach einem der Ansprüche 1 bis 5, wobei ein Acryl-Harz (4), das für die Acryl-Harzemulsion (B) verwendet wird, durch Copolymerisation von einem Acrylat (4a) und einem zusätzlichen Vinyl-Monomer (4b), das copolymerisierbar ist mit dem Acrylat (4a), erhalten wird.

7. Die wässrige Harzzusammensetzung für einen Beschichtungszweck nach Anspruch 6, wobei das zusätzliche Vinyl-Monomer (4b) Styren oder ein Styren-Derivat ist.

8. Die wässrige Harzzusammensetzung für einen Beschichtungszweck nach einem der Ansprüche 1 bis 7, wobei das Reaktionsprodukt (3) einen Säurewert basierend auf einer Festkörperbasis in dem Bereich von 15 bis 45 mgKOH/g aufweist.

9. Ein wässriger Beschichtungsstoff, umfassend die wässrige Harzzusammensetzung für einen Beschichtungszweck nach einem der Ansprüche 1 bis 8

**Revendications**

1. Composition de résine en phase aqueuse pour un revêtement, comprenant: une composition aqueuse (A) d'un produit réactionnel (3) ; et une émulsion de résine acrylique (B), dans laquelle le produit réactionnel (3) est obtenu par polymérisation, dans une résine époxy modifiée (1), d'un composant monomère vinylique (2) comprenant un monomère vinylique (2a) contenant un groupe carboxyle, dans laquelle la résine époxy modifiée (1) est un produit d'une réaction d'au moins une résine époxy (1a) comprenant une résine époxy aromatique (1a-1) et d'une amine (1 b), dans laquelle l'amine (1 b) est une ou plusieurs choisie(s) parmi les amines primaires aliphatiques les amines secondaires aliphatiques, l'éthanolamine, la diéthanolamine, la diisopropanolamine, la di-2-hydroxybutylamine, la N-méthyléthanolamine, la N-éthyléthanolamine et la N-benzyléthanolamine, la composition aqueuse (A) du produit réactionnel (3) est une dispersion ou une solution du produit réactionnel (3) dans de l'eau, dans laquelle le produit réactionnel (3) est neutralisé avec un composé basique, et le rapport en poids ((A)/(B)) basé à l'état solide de la composition aqueuse (A) sur l'émulsion de résine acrylique (B) se situe dans la plage comprise entre 50/50 et 95/5.

2. Composition de résine en phase aqueuse pour un revêtement selon la revendication 1, dans laquelle la résine époxy modifiée (1) est un produit d'une réaction de la résine époxy (1a) comprenant la résine époxy aromatique (1a-1), l'amine (1 b) et un composé supplémentaire (1 c) capable de réagir avec au moins l'une des résines (1a) et l'amine (1b).

3. Composition de résine en phase aqueuse pour un revêtement selon la revendication 2, dans laquelle le composé supplémentaire (1c) comprend un monomère vinylique (1c-1) contenant un groupe glycidyle, la résine époxy modifiée (1) est une résine époxy modifiée (1') contenant un groupe polymérisable insaturé et le produit réactionnel (3) est une résine époxy (3') modifiée par un vinyle, obtenue par copolymérisation de la résine époxy (1') modifiée contenant un groupe polymérisable insaturé et du composant monomère vinylique (2).

4. Composition de résine en phase aqueuse pour un revêtement selon l'une quelconque des revendications 1 à 3, dans laquelle la résine époxy (1a) est un mélange de la résine époxy aromatique (1a-1) et d'une résine époxy aliphatique (1a-2).

5. Composition de résine en phase aqueuse pour un revêtement selon l'une quelconque des revendications 1 à 4, dans laquelle le composant monomère vinylique (2) comprend en outre un monomère vinylique supplémentaire (2b) copolymérisable avec le monomère vinylique (2a) contenant un groupe carboxyle.

6. Composition de résine en phase aqueuse pour un revêtement selon l'une quelconque des revendications 1 à 5, dans laquelle la résine acrylique (4) utilisée pour l'émulsion de résine acrylique (B) est obtenue par copolymérisation d'un ester d'acrylate (4a) et d'un monomère vinylique supplémentaire (4b) copolymérisable avec l'ester d'acrylate (4a).

7. Composition de résine en phase aqueuse pour un revêtement selon la revendication 6, dans laquelle le monomère vinylique supplémentaire (4b) est le styrène ou un dérivé du styrène.

8. Composition de résine en phase aqueuse pour un revêtement selon l'une quelconque des revendications 1 à 7, dans laquelle le produit réactionnel (3) a un indice d'acide basé à l'état solide dans la plage de 15 à 45 mgKOH/g.

9. Composition aqueuse de revêtement comprenant la composition de résine en phase aqueuse pour un revêtement selon l'une quelconque des revendications 1 à 8.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003026739 A
- JP 2005120340 A
- US 2007283852 A1
- JP 6329974 A